Europäisches Patentamt

(19) European Patent Office

Office européen des brevets

(11) Publication number: **0 039 213**
**A1**

# (12) EUROPEAN PATENT APPLICATION

(21) Application number: 81301805.8

(22) Date of filing: 23.04.81

(51) Int. Cl.³: **A 01 D 75/30**

(30) Priority: 28.04.80 GB 8013938

(43) Date of publication of application:
04.11.81 Bulletin 81/44

(84) Designated Contracting States:
AT BE CH DE FR GB IT LI LU NL SE

(71) Applicant: RANSOMES SIMS & JEFFERIES LIMITED
Nacton Works
Ipswich IP3 9QG(GB)

(72) Inventor: Aldred, Edward John
Gipping House
Great Blackenham Ipswich Suffolk(GB)

(74) Representative: Coleman, Stanley et al,
MATHYS & SQUIRE 10 Fleet Street
London EC4Y 1AY(GB)

(54) Turf maintenance machine.

(57) Turf maintenance machines have working units which are desirably counterbalanced at least partially in the working position to allow floating over ground contours. Known machines tend to have a relatively wide variation in the counterbalanced weight over the range of working levels. The invention provides a machine with a gas spring (67) which applies an almost constant force and is located to act so that the resultant weight of its associated unit is substantially constant at all working levels. Preferably this is achieved by having the inner end of a lifting and lowering arm (23) supporting a lateral unit (15) welded to a sleeve (39), freely rotatable on a shaft (27), which carries a pair of cranks (43, 47) to which the gas spring and an hydraulic lifting and lowering ram (51) are pivotally connected. The machine may have two lateral units (15, 17) on opposite sides and a central unit all counterbalanced by gas springs.

./...

FIG. 2

## TURF MAINTENANCE MACHINE

The present invention relates to turf maintenance machines, and particularly to such machines of the kind (hereinafter referred to as machines of the kind set forth) comprising a chassis, ground engaging wheels on which the chassis is carried, a working unit supported from the chassis for relative movement thereto, and spring means for counterbalancing the unit.

Partial counterbalancing of a unit when in its working position is desirable, because it allows the unit to float over irregularities in the ground.

In prior art machines, counterbalance is often provided by a torsion spring, which supports at least a part of the weight of the unit in the working position thereof. Such springs are usually large and cumbersome, so that there may be difficulty in accommodating them in the turf maintenance machine, and they are also expensive.

It is also desirable that the resultant counterbalanced weight of the unit should not vary greatly throughout the range of working levels of the unit so that the force of the unit on the ground when the unit is operating in a hollow or on a rise is substantially constant. One proposal for reducing the variation in the degree of counterbalance provided is described in our United Kingdom Patent specification No 1 241 751, which relates to a mower machine. A long coil torsion spring is provided, which, as a result of a fairly complex pre-tensioning procedure, is given an initial tension in the out-of-work position of the unit. This enables a smaller variation to be achieved in the proportion of the weight which is counterbalanced in the various working positions. The amount of counterbalance does however vary to some extent with the level of the unit so that it might be for example around 50% of the weight of the unit when the unit is cutting on a rise above the normal ground level and this might increase to around 75% of the weight when the unit is in a hollow. Further, in addition to the problems of pre-tensioning, the release of tension for servicing of the machine needs to be expertly carried out if it is not to put the safety of machine operatives at risk.

It is an object of the present invention to provide a turf maintenance machine having an improved counterbalancing arrangement.

According to the invention there is provided a turf maintenance machine of the kind set forth, characterised in that the counterbalancing spring means comprises a cylinder which contains a permanent charge of gas, and a rod engaged within the cylinder and providing a piston therein, whereby the spring and the unit are so relatively connected that, in the operative working position of the unit, gas in the cylinder is compressed to apply counterbalancing force to the unit to an extent which causes the counterbalanced weight thereof to be substantially constant during working over a range of levels of the unit with respect to the chassis.

The gas spring can be provided with a rod having a piston mounted on one end, or alternatively the rod itself can act as a piston by being a sliding fit within the cylinder.

Suitably, the unit is pivotally supported from an arm, the arm being rotatable about an axis fixed relatively to the chassis to move the unit into and out of an operative working position thereof.

Advantageously, the arm is rotatable by hydraulic means supported on the chassis about an axis fixed relatively to the chassis.

The hydraulic means suitably comprises an hydraulic ram pivotally connected at respective opposite ends thereof relatively to the chassis and the arm so that with extension and retraction of the ram the arm rotates in opposite senses about the axis of rotation thereof on the chassis. The gas spring acts so as to assist in the lifting of a unit and consequently either a smaller hydraulic ram can be used than would otherwise be needed, or lower hydraulic pressures can be employed.

Preferably, the machine also includes a crank mounted in relation to the chassis so as to be rotatable about said axis of rotation, with the end of the arm remote from the unit fixedly secured relative to the crank to form a unitary structure therewith, and wherein the gas spring and the hydraulic ram are pivotally connected to the unitary structure, and preferably the crank, at respective locations close to the rotational axis of the structure.

In one preferred form, the invention comprises a grass mower machine in which the working units are cutter units.

The invention will now be described by way of example, with reference to the accompanying drawings in which:-

Figure 1 is a somewhat diagrammatic front view of a grass mower machine according to the invention;

Figure 2 is a front view showing part of the structure of the machine in Figure 1; and

Figure 3 is a view from the left in Figure 2, showing the structure on one side of the machine.

Although the embodiment of the invention hereinafter described concerns a grass mower machine, those skilled in the art will appreciate that the invention is broadly applicable to turf maintenance machines in which counterbalancing force is applied to a unit in its working position.

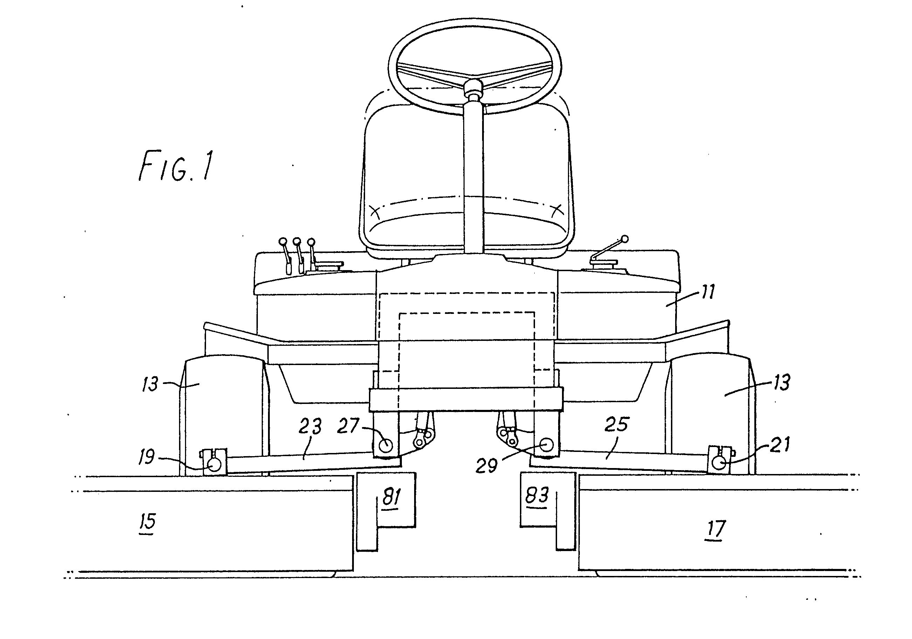

Referring to the drawings, there is illustrated in Figure 1 a self-propelled grass mower machine, comprising a chassis 11 carried on two pairs of ground engaging wheels, the front pair 13 of which is seen in Figure 1. The drive for the machine is provided by an internal combustion engine (not shown) which is mounted on the chassis and coupled by conventional transmission means to drive the wheels 13.

Two laterally extending cutter units 15, 17 of the helically bladed type are supported forwardly of the chassis 11. In Figure 1 the units are in the cutting position, being suspended from respective pivot shafts 19, 21, at the outer ends of arms 23, 25. The inner ends of the arms are connected, as described below, so as to be rotatable about axes 27 and 29, fixed relatively to the chassis 11.

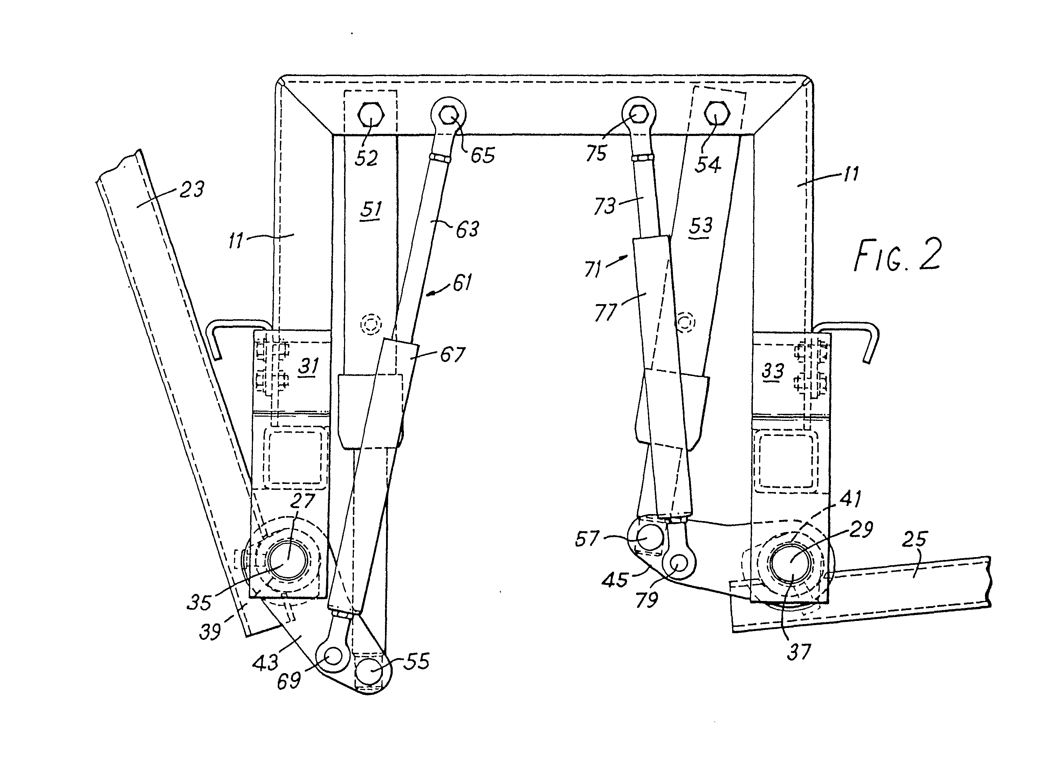

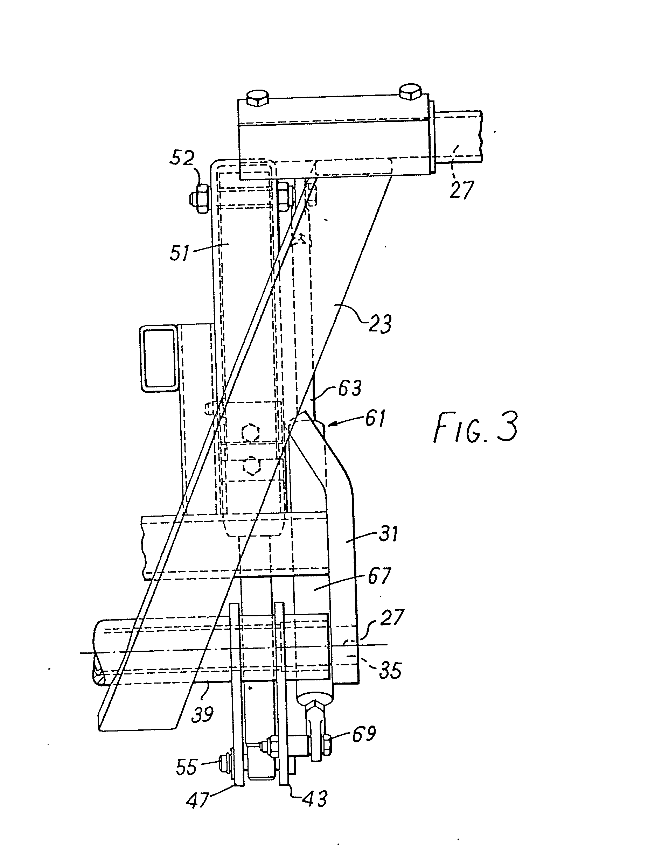

Figures 2 and 3 show some of the internal structure of the machine in greater detail. In Figure 2 the arm 25 is in a lowered position, so that its unit 17 rests on the ground. Arm 23 is shown in Figures 2 and 3 in the raised position. It will be apparent that the two sides of the machine are symmetrical and independently actuable.

Near the front end of the machine are two brackets 31, 33 supporting longitudinally extending shafts 35, 37 with their axes co-incident with the axes of rotation 27 and 29 of the arms 23 and 25. Each shaft carries a freely rotatable sleeve 39, 41, and the inner end of each arm is welded to one of the sleeves so as to be rotatable therewith about the axis. Each sleeve also has welded thereto a pair of parallel cranks. One crank of each pair, 43, 45, is spaced forwardly of the other and is visible in Figure 2. Figure 3 shows crank 43 and also the rear crank 47 on the right-hand side of the machine, which is the left-hand side as seen in Figure 2.

A pair of hydraulic rams 51, 53 are pivotally connected by pins 52, 54 at their cylinder ends to an upper part of the chassis and extend downwardly towards the cranks. The ram 51 extends in a substantially vertical direction and its lower end is connected between the two cranks 43, 47 by pin 55 at a location remote from shaft 35. Ram 53 is similarly connected by pin 57 to the cranks on the other side of the machine, but because the cranks are positioned so that unit 17 lies on the ground, the ram is slightly inclined, with its piston retracted.

Also connected between the chassis and the cranks are two gas springs 61, 71. Spring 61 has a rod 63, the upper end of which is pivotally connected to the chassis 11 by pin 65, and a gas charged cylinder 67, the lower end of which is connected at pin 69 to front crank 43, close to the connection with the hydraulic cylinder 51. There is a similar gas spring 71 on the other side of the machine, with rod 73 connected by pin 75 to the chassis and cylinder 77 connected by pin 79 to the crank 45. Each of the springs 61, 71 has an internal piston (not shown) carried by its rod and movable with the rod relative to the cylinder so as to compress the charge of gas. The springs may alternatively be provided with rods which are a sliding fit within the cylinders.

The two arms 23, 25 carrying cutter units can be independently raised from the working position shown in Figure 1 to an out-of-work position, as shown for arm 25 in Figure 2, and lowered again.

In order to raise the unit 17, for example, from the ground the cylinder of ram 53 is pressurised to extend the ram and rotate the cranks and arm 25 with sleeve 41, anti-clockwise as seen in Figure 2 about the axis 29 of shaft 37. At all times the gas in the cylinder 77 is compressed to some extent so that there is partial counterbalancing of the unit by the gas spring 71. In consequence, the force required for lifting the unit is less than it would otherwise have been, had the counterbalancing of the gas spring not been provided. Thus a relatively small hydraulic ram may be used, permitting a compact construction of machine, or lower system pressures can be employed, enabling use of cheaper, less robust components.

To lower a unit, for example unit 15 on arm 23 from the out- of-work position shown in Figure 2, a passage for fluid from ram 51 is opened and fluid is expelled from the ram under the action of the resultant weight of the unit 15 acting about the axis 27 as counterbalanced by the upwardly directed force of gas spring 61, also acting about axis 27. Thus, the piston of ram 51 is retracted and the sleeve 39, with cranks 43, 47 and arm 23 welded thereto are rotated in the anti-clockwise direction as seen in Figure 2 about the fixed shaft 35. When the unit reaches the working position shown in Figure 1, the compressed gas in cylinder 67 continues to apply the counterbalancing force to the unit 15, and the unit rests with its resultant weight upon the ground, that is, with its full weight minus the counterbalancing force. Thus, by reason of the counterbalancing and the suspension of the unit from the arm allowing movement relative to the chassis, the unit is able to float over ground contours during operation of the machine.

The machine shown in the figures has hydraulic drive motors 81, 83 for the cutter units 15 and 17 respectively. As a safety measure it is common to provide means for cutting out the drive to the cutter units when the units are raised from the ground, thus obviating the risk of injury to bystanders. For hydraulically driven units, the raising of a unit to its transport position may be arranged to actuate a valve to cause the flow to the associated drive motor to be interrupted, the arrangement further being such that flow is resumed when the unit is lowered. Where the units are mechanically driven from the vehicle transmission there may be a lever mechanism to disengage the drive to an associated unit when that unit is raised, and a mechanism of this kind is described in UK Patent No 1 474 537.

The mower machine described above is sketched only diagrammatically in Figure 1, which omits to show a centrally hung cutter unit which lies beneath the body of the machine between the front and rear wheels. For central units the amount of movement between the operative and out-of-work positions and also the range of movement in the operative position is less than for lateral units, but there is nevertheless advantage in having gas spring counterbalancing. Thus the central unit is provided in a similar manner to the lateral units 15 and 17, with an hydraulic lifting and lowering ram and a gas spring each pivotally connected at one end to the chassis and at the other end to a crank rotatable with a sleeve to which is welded an arm carrying a cutter unit on one end thereof. However, the gas spring and ram extend in a direction close to the horizontal longitudinal axis of the machine, and the arm carrying the unit is shorter than the arms 23 and 25.

Gas springs are low rate springs and the two gas springs 61 and 71, and the spring associated with the central cutter unit, apply counterbalancing force to their respective units which differs by only a small amount between the extended and retracted positions of the pistons in the gas cylinders.

Furthermore, the fact that the gas springs are low rate springs enables there to be an arrangement which is particularly advantageous, namely one which causes the counterbalanced weight of the cutter units to be substantially constant during working over a range of levels of the units with respect to the chassis. This is achieved by selection of cranks and fixing of each gas spring relative thereto so as to have over a desired range of working levels of each unit, a spring moment about each shaft axis which varies to an extent corresponding to the variation of the moment of the respective cutter unit about the axis such that the difference between the two forces (i.e. the resultant weight of the unit) is substantially constant.

### EXAMPLE

In one machine according to the invention, very similar to that shown, a gas spring is pivotally attached to a crank at a distance of 1.2 metres from the axis of rotation and the spring applies a force of approximately 173 kgf irrespective of the position of the piston within the cylinder of the gas spring. The associated lifting and lowering arm is 4.35 metres long and supports a lateral cutting unit of weight 80 kgf. The resultant weight of the unit over a range of angles can be calculated and is given in the following

table.

<div align="center">Table</div>

| Angle of Inclination of Arm (0° for horizontal arm) | Resultant weight of Unit (kgf) |
|---|---|
| 0° | 33.1 |
| 15° (rise) | 32.5 |
| 30° " | 31.9 |
| 45° " | 29.6 |
| 60° " | 24.7 |
| -12° (depression) | 33.1 |

Thus it can be seen that over normal ground, where the variation in inclination of the arm would be unlikely to be more than 15° greater or less than the inclination with the unit on level ground, the counterbalance provided for the unit is substantially constant.

UK Patent No 1 474 537 mentioned above, relates to a mower machine similar in some respects to that described and illustrated herein, and some general information may be obtained by referring to this document. It will be noted that in Patent No 1 474 537 the machine is a self-propelled grass mower machine having two wing cutter units and a central unit. Each unit is biassed upwardly by a respective coil spring, in contrast with the machine of the present invention where gas springs are provided.

Those skilled in the art will appreciate that many changes could be made to the machine illustrated and described without departing from the scope of the invention. For example, instead of two lateral cutter units there could be one or several such units, each having a respective gas spring. As mentioned above, the invention is not restricted to mower machines, but is applicable to a variety of turf maintenance machines. Since the range of movement in the operative position is less for central units than for lateral units, mechanical torsion springs could be used instead of gas springs for the central units. Variations and changes could be made in the hydraulic arrangement, the configuration of the cranks, and the means for cutting out the drive to the units when they are raised from their operative positions. Gas springs can be provided in either ride-on or self-propelled machines.

- 10 -

CLAIMS:

1. A turf maintenance machine comprising a chassis (11), ground engaging wheels (13) on which the chassis is carried, a working unit (15) supported from the chassis for relative movement thereto, and spring means for counterbalancing the unit, characterised in that the counterbalancing spring means comprises a cylinder (67) which contains a permanent charge of gas, and a rod (63) engaged within the cylinder and providing a piston therein, whereby the spring and the unit are so relatively connected that, in the operative working position of the unit, gas in the cylinder is compressed to apply counterbalancing force to the unit to an extent which causes the counterbalanced weight thereof to be substantially constant during working over a range of levels of the unit with respect to the chassis.

2. A turf maintenance machine as claimed in claim 1, characterised in that the unit is pivotally supported from an arm (23), the arm being rotatable about an axis (27) fixed relatively to the chassis to move the unit into and out of an operative working position thereof.

3. A turf maintenance machine as claimed in claim 2, characterised in that the arm is rotatable by hydraulic means supported on the chassis.

4. A turf maintenance machine as claimed in claim 3, characterised in that they hydraulic means comprises an hydraulic ram (51) pivotally connected at respective ends thereof relatively to the chassis and the arm so that with extension and retraction of the ram the arm rotates in opposite senses about the axis of rotation thereof on the chassis.

5. A turf maintenance machine as claimed in claim 4, characterised in that the machine includes a crank (43) mounted in relation to the chassis so as to be rotatable about said axis of rotation, with the end of the arm remote from the unit fixedly secured relative to the crank to form a unitary structure therewith, and wherein the gas spring and the hydraulic ram are pivotally connected to the unitary structure at respective locations (55, 69) close to the rotational axis of the structure.

6. A turf maintenance machine as claimed in claim 5, characterised in that the gas spring and the hydraulic ram are connected to the crank.

7. A turf maintenance machine as claimed in claim 5 or claim 6, characterised in that means is provided for cutting out the drive to the working unit when the unit is lifted from the working position thereof.

8. A turf maintenance machine as claimed in any preceding claim, characterised in that two or more working units having respective counterbalancing gas springs are pivotally supported from respective arms to be movable, each into and out of a working position laterally of the chassis.

9. A turf maintenance machine as claimed in any preceding claim, characterised in that a working unit having a counterbalancing gas spring is pivotally supported to lie in the working position thereof centrally with respect to the chassis.

10. A turf maintenance machine as claimed in any preceding claim, characterised in that the working units are cutter units.

FIG.1

FIG. 2

FIG. 3

**European Patent Office**

**EUROPEAN SEARCH REPORT**

**0039213**
Application number

EP 81 30 1805

## DOCUMENTS CONSIDERED TO BE RELEVANT

| Category | Citation of document with indication, where appropriate, of relevant passages | Relevant to claim |
|---|---|---|
| | <u>US - A - 3 641 748</u> (VOSE)<br>* In its entirety *<br><br>-- | 1-4,8,<br>10 |
| | <u>GB - A - 1 175 894</u> (JACOBSEN)<br>* Page 4, lines 72-80 *<br><br>-- | 3,4 |
| | <u>FR - A - 2 280 308</u> (RANSOMES<br>SIMS & JEFFERIES)<br>* Claims * | 7 |
| D | & GB - A - 1 474 537<br><br>-- | |
| D | <u>GB - A - 1 241 751</u> (RANSOMES SIMS<br>& JEFFERIES)<br>* Claims *<br><br>-- | 1,8,<br>10 |
| A | <u>US - A - 2 826 129</u> (OLSON)<br>* Column 10, lines 18-35 *<br><br>-- | 1 |
| A | <u>US - A - 3 063 226</u> (PFAUSER)<br>* Column 3, line 69 - column 4,<br>line 17 *<br><br>-- | 1 |
| A | <u>GB - A - 1 028 700</u> (VAN DER LELY)<br>* Page 4, lines 34-46; page 5,<br>lines 56-58; figure 6 *<br><br>-- | 1 |
| A | <u>US - A - 3 264 808</u> (HAGAN)<br>* Column 3, lines 31-63 * | 1 |

-----

The present search report has been drawn up for all claims

**CLASSIFICATION OF THE APPLICATION (Int. Cl 3)**

A 01 D 75/30

**TECHNICAL FIELDS SEARCHED (Int. Cl 3)**

A 01 D
A 01 B

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family.
corresponding document

| Place of search | Date of completion of the search | Examiner |
|---|---|---|
| The Hague | 22-07-1981 | DE LAMEILLEURE |

EPO Form 1503.1  06.78